# EUROPÄISCHE PATENTSCHRIFT

(11) **EP 3 912 958 B1**
(45) Veröffentlichungstag und Bekanntmachung des Hinweises auf die Patenterteilung: **26.06.2024**
(21) Anmeldenummer: 21170960.5
(22) Anmeldetag: 28.04.2021
(51) Int. Cl.: C01B 21/26, C01B 21/28

(54) **VERFAHREN UND PRODUKTIONSANLAGE ZUM HERSTELLEN VON SALPETERSÄURE**
METHOD AND PRODUCTION ASSEMBLY FOR PRODUCING NITRIC ACID
PROCÉDÉ ET INSTALLATION DE PRODUCTION DESTINÉS À LA PRODUCTION D'ACIDE NITRIQUE

(30) Priorität: 22.05.2020 DE 102020003083
(43) Veröffentlichungstag der Anmeldung: 24.11.2021
(73) Patentinhaber: Messer SE & Co. KGaA, 65812 Bad Soden (DE)
(72) Erfinder: VAN GELLECOM, Nina, 40822 Mettmann (DE)
(74) Vertreter: Münzel, Joachim R.

(56) Entgegenhaltungen:
- EP-A2- 0 808 797
- DE-A1-102014 006 017
- US-A- 6 165 435

## Beschreibung

Die vorliegende Erfindung betrifft ein Verfahren zum Herstellen von Salpetersäure nach dem Oberbegriff des Patentanspruchs 1. Die Erfindung betrifft ferner eine Produktionsanlage zum Herstellen von Salpetersäure nach dem Oberbegriff des Patenanspruchs 6.

Die Erfindung betrifft somit ein Verfahren bzw. eine Anlage zur technischen Herstellung von Salpetersäure, bei dem bzw. in der ein mehrstufiges katalytisches Ammoniakoxidationsverfahren (Ostwald-Verfahren) zum Einsatz kommt. Im ersten Schritt wird dabei Ammoniak und Sauerstoff in einem Reaktor (im Folgenden auch "Ammoniakverbrennungseinrichtung" genannt) an einem meist aus Edelmetallen, beispielsweise Platin-Rhodium, bestehenden Netzkatalysator, zu Stickstoffmonoxid und Wasserdampf umgesetzt:

(1) 4 NH₃ + 5 O₂ ⇆ 4 NO + 6 H₂O

Diese Reaktion wird bei hohen Temperaturen, beispielweise 900 °C, durchgeführt. Im Allgemeinen arbeitet man mit einer überstöchiometrischen Menge an Luft bzw. Sauerstoff, um zu verhindern, dass sich ein explosionsfähiges Gemisch bildet und um zusätzlichen Sauerstoff für nachfolgende Oxidationsreaktionen bereitzustellen. Anschließend wird der Reaktoraustrag in einem Kondensator auf eine Temperatur abgekühlt, in der ein Teil der im Prozessgasstrom enthaltenen Komponenten auskondensiert. Dabei reagiert ein Teil des Stickstoffmonoxids mit Wasser und Sauerstoff unter Bildung einer wässerigen Salpetersäure enthaltenden Lösung, die im Übrigen auch Stickoxide, insbesondere Stickstoffmonoxid enthält. Das verbleibende, nicht in Lösung gehende Gasgemisch wird einem Absorptionsturm (Kolonne) zugeführt, in welchem ein Teil des gasförmigen Stickstoffmonoxids mit Sauerstoff, der in Form von Luftsauerstoff oder in Form von reinem Sauerstoff bereitgestellt wird, zu Stickstoffdioxid bzw. dessen Dimer Distickstofftetraoxid oxidiert wird, welche anschließend mit Wasser zu Salpetersäure umgesetzt werden:

(2) 2 NO + O₂ ⇆ 2 NO₂ ⇆ N₂O₄

(3) 3 NO₂ + H₂O ⇆ 2 HNO₃ + NO

(4) N₂O₄ + H₂O ⇆ HNO₃ + HNO₂

(5) 2 HNO₂ ⇆ HNO₃ + 2 NO + H₂O

(6) 2 N₂O₄ + O₂ + 2 H₂O ⇆ 4 HNO₃

Das Wasser bzw. die sich bildende Salpetersäure enthaltende Lösung (Schwachsäure) durchläuft dabei den Absorptionsturm üblicherweise im Gegenstrom zum aufsteigenden Gasstrom. Die flüssige Phase, welche sich zuvor im Kondensator gebildet hat, wird üblicherweise auf einem der unteren Böden der Kolonne zugeführt. Die Salpetersäure sammelt sich am Boden des Absorptionsturms in einer wässrigen Lösung an. Diese Salpetersäure wird zum Kopf einer Bleichkolonne geführt und dort aufgegeben. Im Gegenstrom dazu wird in der Bleichkolonne Luft zugeführt, um die noch in der Lösung enthaltenen nitrosen Gase auszutreiben.

In vielen Fällen werden auch mehrere Absorptionstürme hintereinander geschaltet, wobei die Reihe der Absorptionstürme vom Gasstrom bzw. der Salpetersäure im Gegenstrom durchlaufen wird. Um die Löslichkeit der nitrosen Gase zu erhöhen, wird der Absorptionsturm bzw. werden die Absorptionstürme bei einem höheren Druck von 1 bis 15 bar(g) betrieben. Bei Anlagen, deren Absorptionstürme auf einem vergleichsweise niedrigen Druck von 1 bis 5 bar(g) arbeiten (Nieder- und Mitteldruckanlagen), ist der Anteil nitroser Abgase im Abgas verhältnismäßig hoch. Das Anlegen höherer Drücke führt zwar zu einer Verringerung des Restgehaltes an Stickoxiden im Abgas, ist jedoch mit erheblichen Mehrkosten für die Kompression und die entsprechend für höhere Drücke geeignete Auslegung der Anlagenkomponenten verbunden.

Um die Effizienz dieses Verfahrens zu steigern wurde bereits versucht, durch Einleitung zusätzlichen Sauerstoffs an verschiedenen Stellen den Sauerstoffpartialdruck zu erhöhen, die Umsetzung in Richtung der Produkte zu fördern und somit den Anteil nitroser Gase im Abgas zu reduzieren. So wird beispielsweise in der EP 0 799 794 A1, der EP 1 013 604 B1 oder der EP 2 953 894 A1, der DE 10 2014 006 017 A1 und der EP 0 808 797 A2 vorgeschlagen, durch Zuführen von Sauerstoff oder eines mit Sauerstoff angereicherten Gases in den oben skizzierten Prozess zur Salpetersäureproduktion die Effizienz des Prozesses zu steigern, die Qualität der produzierten Salpetersäure zu verbessern oder die Entstehung unerwünschter NOₓ-Gase zu verringern.

Aus der US 6 165 435 A ist ein Verfahren zum Eintragen von Sauerstoff in einen säurehaltigen Prozessstrom, bei dem der Eintrag in Form kleiner Gasblasen mit einer Größe von bis zu 0,1 mm bekannt. Die Gasblasen dient insbesondere dazu, im Prozessstrom enthaltene Verunreinigungen aufzunehmen. Nach einer kurzen Verweildauer im Prozessstrom steigen die Gasblasen zur Oberfläche auf und werden mitsamt den darin enthaltenen Verunreinigungen abgeführt.

Trotz derartiger Verbesserungen ist es möglich, eine weitere Effizienzsteigerung und Prozessoptimierung des eingangs beschriebenen Verfahrens zur Salpetersäureproduktion zu erreichen, was zugleich Aufgabe der vorliegenden Erfindung ist.

Gelöst ist diese Aufgabe durch ein Verfahren mit den Merkmalen des Patentanspruchs 1 sowie durch eine Produktionsanlage zur Herstellung von Salpetersäure mit den Merkmalen des Patentanspruchs 6. Vorteilhafte Ausgestaltungen der Erfindung werden in den Unteransprüchen angegeben.

Das erfindungsgemäße Verfahren zum Herstellen von Salpetersäure ist also dadurch gekennzeichnet, dass in zumindest eine der Leitungen, in denen Salpetersäure enthaltende Lösung transportiert wird, und/oder in einen der Reaktoren, die zumindest vorübergehend Salpetersäure enthaltende Lösung aufweisen, also insbesondere dem Kondensator und/oder dem Absorptionsturm und/oder der Bleichkolonne, Sauerstoff in Form von Sauerstoff enthaltenden Nanobubbles mit einem Durchmesser zwischen 20 nm und 1 µm zugeführt wird. Die Sauerstoff enthaltenden Nanobubbles werden dabei unmittelbar in der Salpetersäure enthaltenden Lösung erzeugt, die durch die Leitung geführt wird, bzw. oder in dem Reaktor enthalten ist, oder sie werden in einem wässerigen Fluid erzeugt, das anschließend der Salpetersäure enthaltenden Lösung zugeführt wird.

Kern der Erfindung ist also, dass der Eintrag des Sauerstoffs zumindest zum wesentlichen Teil in Form von kleinen, Sauerstoff enthaltenden Gasblasen erfolgt, deren Durchmesser unter 1 µm beträgt, die im Folgenden als "Nanobubbles" bzw. "Nanobläschen", bezeichnet werden. Derart kleine Gasblasen führen bereits aufgrund ihres großen Oberfläche-zu Volumen-Verhältnisses zu einer effizienten Einlösung des Sauerstoffs in eine wässerige Umgebung.

Als "Nanobubbles" oder "Nanobläschen" sollen hier Gasblasen mit einem Durchmesser von unter 1 µm verstanden werden. Die Bezeichnung "Nanobubble" erfolgt insbesondere zur Unterscheidung von größeren Bläschen mit einem Durchmesser zwischen 1 µm und 100 µm, die im Kontext der vorliegenden Erfindung als "Mikrobubbles" oder "Mikrobläschen" bezeichnet werden. Es hat sich in verschiedenen Untersuchungen gezeigt, dass Nanobubbles mit einem Durchmesser von über 20 nm über einen langen Zeitraum von einigen Wochen oder noch länger in Wasser stabil bleiben können. Im Unterschied zu Mikrobläschen steigen sie nicht zur Wasseroberfläche, da die durch die - vergleichsweise geringe - Auftriebskraft veranlasste Steigbewegung durch die Brownsche Molekularbewegung gestört und fast vollständig aufgehoben wird. Zugleich ist das Zeta-Potenzial an der Oberfläche der Nanobläschen groß genug, um die Oberflächenspannung zu kompensieren und so die Auflösung des Nanobläschens zu verhindern. Bei einem Durchmesser von deutlich unterhalb von 20 nm nimmt die Oberflächenspannung überhand und die Nanobubbles kollabieren rasch. Weiterhin neigen Nanobubbles aufgrund abstoßender Wechselwirkungen ihrer Oberflächen nicht zur Koagulation.

Verfahren und Vorrichtungen zur Erzeugung von Mikro- oder Nanobubbles in wässerige Systeme werden beispielsweise in der US 2012/0175791 A1, der US 2019/0083945 A1, der US 6 382 601 B1, der US 10 293 312 B2 oder der WO 2017/217402 A1 beschrieben, auf die hier Bezug genommen wird, ohne dass damit jedoch die Art des Eintrags der Mikro- oder Nanobubbles nach der vorliegenden Erfindung auf diese vorbekannten Systeme beschränkt werden soll. Wesentlich für die vorliegende Erfindung ist, dass die Vorrichtung so beschaffen ist, dass ein wesentlicher Teil des einem wässerigen Fluid zugeführten Sauerstoffs im Fluid in Form von Mikro- oder Nanobubbles erzeugt wird. Dies wird beispielsweise dadurch bewerkstelligt, dass der Sauerstoff durch eine Düse oder eine Einperlvorrichtung mit einem Abschnitt aus einem porösen Material, etwa Sinterkeramik oder Sintermetall, eingetragen wird, dessen Porendurchmesser so groß sind, dass im Fluid stabile Gasblasen der gewünschten Größenordnung entstehen. Beispielsweise liegen die Durchmesser der Poren des porösen Materials ebenfalls im Mikro- oder Nanobereich, also unter 100 µm.

Eine im Kontext der vorliegenden Erfindung bevorzugte Größe der Nanobubbles liegt bei einem mittleren Durchmesser zwischen 20 nm und unter 1 µm, zwischen 20 nm und 500 nm oder zwischen 20 nm und 200 nm.

Nanobubbles sind ebenso wie Mikrobubbles zum Stoffaustausch mit ihrer Umgebung in der Lage. Ein mit einem bestimmten Gas beladenes Nanobläschen kann in Abhängigkeit von der Sättigung dieses Gases in einer umgebenden Lösung Gasmoleküle in die Lösung abgeben oder aus dieser aufnehmen. Im Kontext mit einem Prozess zur Herstellung von Salpetersäure sind die Mikro- oder Nanobubbles mit Sauerstoff oder einem sauerstoffhaltigen Gas, wie Luft oder mit Sauerstoff angereicherte Luft, gefüllt und stellen somit ein stabiles Reservoir an Sauerstoff dar. Der erfindungsgemäß in Form von Nanobläschen eingetragene Sauerstoff besitzt nur eine sehr geringe Tendenz, zu größeren Gasblasen zu koagulieren und/oder zur Oberfläche aufzusteigen.

Chemische Parameter wie insbesondere der pH-Wert haben einen Einfluss insbesondere auf die Mindestgröße der Gasblasen, ab der sie stabil in der Salpetersäure enthaltenden Lösung vorliegen können. Um zu gewährleisten, dass ein möglichst großer Anteil des Sauerstoffs in der Salpetersäure enthaltenden Lösung in Form von stabilen Nanobläschen vorliegen kann, ist es daher zweckmäßig, die Art der Eintragsvorrichtung so zu wählen, dass die Durchschnittsgröße der beim Eintrag erzeugten Bläschen und deren Stabilität bei den in der Salpetersäure enthaltenden Lösung vorherrschenden Bedingungen berücksichtigt wird. Dies kann beispielsweise empirisch erfolgen, indem verschiedene Eintragsvorrichtungen vor einer dauerhaften Inbetriebnahme getestet und deren Eignung für das jeweilige chemische System festgestellt wird.

Die Dosierung des Sauerstoffs in Form von Sauerstoff enthaltenden Nanobubbles kann im Herstellungsprozess der Salpetersäure grundsätzlich an allen Stellen erfolgen, in denen Salpetersäure enthaltende Lösung transportiert oder zumindest vorübergehend gespeichert wird. Dies kann insbesondere eine vom Boden des Absorptionsturms oder des Kondensators abführende oder in den Absorptionsturm oder die Bleichkolonne einmündende Leitung oder der Sumpf des Absorptionsturms oder der Bleichkolonne oder des Kondensators selbst sein, sowie eine oder mehrere der genannten Stellen. Ebenso kann die Dosierung des Sauerstoffs in Form von Sauerstoff enthaltenden Nanobubbles in ein wässeriges Fluid erfolgen, das anschließend Salpetersäure enthaltender Lösung eines Reaktionsschritts zugeführt wird, beispielsweise in Frischwasser, dass einem Absorptionstum zugeführt wird.

Das Verfahren umfasst insbesondere solche Anwendungsfälle, bei denen nur ein Absorptionsturm vorhanden ist, in denen der "erste Absorptionsturm" also der einzige Absorptionsturm der Produktionsanlage ist. Die Erfindung ist jedoch keineswegs auf solche Anwendungsfälle beschränkt; vielmehr kann auch eine Anordnung aus mehreren Absorptionstürmen zum Einsatz kommen. Dabei durchströmt in an sich bekannter Weise das stickoxidhaltige Prozessgasgemisch den ersten Absorptionsturm und wird wenigstens einem zweiten Absorptionsturm zugeführt und dort mit Wasser oder Schwachsäure im Gegenstrom in Kontakt gebracht. Dabei reagiert das stickoxidhaltige Gasgemisch zumindest teilweise unter Bildung einer wässerigen, Salpetersäure enthaltenden Lösung, bzw. Schwachsäure, die sich am Boden des zweiten Absorptionsturms ansammelt und von dort mittels einer Fördereinrichtung über eine Steigleitung einem oberen Bereich des ersten Absorptionsturms zugeführt wird. In einer bevorzugten Ausführungsform der Erfindung wird auch in diese Steigleitung und/oder in den Sumpf dieses zweiten Absorptionsturms (oder wenigstens einer dieser Steigleitungen oder zweiten Absorptionstürme) Sauerstoff in Form von Sauerstoff enthaltenden Nanobubbles eingeleitet, um die in der Schwachsäure gelösten Stoffe mit Oxidationsmittel zur Reaktion zu bringen.

Eine abermals vorteilhafte Ausgestaltung der Erfindung sieht vor, dass vom Boden des ersten und/oder eines weiteren Absorptionsturms Salpetersäure enthaltende Lösung entnommen wird, um über eine Förderleitung in die Bleichkolonne und/oder in einen relativ zum Boden höheren Abschnitt des gleichen Absorptionsturms gefördert zu werden, wobei in die durch diese Förderleitung/en geführte Salpetersäure enthaltene Lösung Sauerstoff in Form von Sauerstoff enthaltenden Nanobubbles eingeleitet wird.

Als "Sauerstoff" in den Sauerstoff enthaltenden Nanobubbles kommt bevorzugt Sauerstoff mit einer Reinheit von wenigstens 95 Vol.-% zum Einsatz, jedoch kann der Sauerstoff auch in Form von Luft oder als sonstiges, Sauerstoff enthaltendes Gasgemisch zugeführt werden.

Da ein höherer Druck die Einlösung des Sauerstoffs sowie die Reaktion insgesamt begünstigt, wird der Sauerstoff in Form von Sauerstoff enthaltenden Nanobubbles bevorzugt an einem Punkt in das System eingespeist, an dem ein gegenüber dem Druck in der Kolonne höherer Druck herrscht. Hierzu bietet sich insbesondere ein geodätisch unterer Abschnitt einer Steigleitung, bevorzugt stromab zu einer gegebenenfalls vorhandenen Fördereinrichtung, an, da hier schon aufgrund des hydrostatischen Drucks ein vergleichsweise hoher Druck herrscht.

Alternativ oder ergänzend dazu ist es vorteilhaft, dass von dem durch eine Leitung geführten Hauptstrom an Salpetersäure enthaltende Lösung ein Teilstrom abgezweigt, in einer Bypassleitung auf einen höheren Druck, als es dem Druck in der Leitung entspricht, verdichtet und mit Sauerstoff in Gestalt von Sauerstoff enthaltenden Nanobubbles angereichert wird. Der angereicherte Teilstrom wird anschließend in den Hauptstrom zurückgeführt oder direkt in einen Reaktor, also beispielsweise den Absorptionsturm oder die Bleichkolonne eingespeist. Beispielsweise wird der Druck des Teilstroms in der Bypassleitung auf einen Wert von 5 bis 15 bar verdichtet, wodurch sich der Sauerstoff noch leichter löst. Im Rahmen der Erfindung vorstellbar ist im Übrigen auch, chargenweise Salpetersäure enthaltende Lösung dem Kondensator oder einem Absorptionsturm zu entnehmen und mit Sauerstoff in Form von Sauerstoff enthaltenden Nanobubbles anzureichern.

Die Aufgabe der Erfindung wird auch durch eine Produktionsanlage mit den Merkmalen des Patentanspruchs 6 gelöst.

Eine Produktionsanlage zum Herstellen von Salpetersäure umfasst eine Ammoniakverbrennungsanlage zum Umsetzen von Ammoniak mit Sauerstoff zu Stickoxiden und Wasserdampf, einen Kondensator zum Abkühlen der Reaktionsprodukte aus der Ammoniakverbrennungsanlage auf eine Temperatur, bei der mindestens ein Teil der Reaktionsprodukte kondensiert, wenigstens einen ersten Absorptionsturm zum Waschen des im Kondensator entstehenden Gasgemisches mit Wasser oder einer wässerigen Lösung, eine Bleichkolonne zum Bleichen von aus dem ersten Absorptionsturm entnommenen Salpetersäure enthaltenden Lösung, sowie wenigstens eine aus dem Kondensator und/oder einem Absorptionsturm abführenden und/oder in den Kondensator und/oder den Absorptionsturm und/oder die Bleichkolonne einmündenden Leitung zum Transportieren von Salpetersäure enthaltenden Lösung. Erfindungsgemäß ist eine solche Produktionsanlage dadurch gekennzeichnet, dass in wenigstens eine Leitung zum Transportieren von Salpetersäure enthaltender Lösung und/oder in den Boden des Kondensators und/oder eines Absorptionsturms und/oder der Bleichkolonne eine Zuleitung für Sauerstoff an einer Eintragsvorrichtung einmündet, die die Einleitung von Sauerstoff in Form von Sauerstoff enthaltenden Nanobubbles mit einem Durchmesser zwischen 20 nm und 1 µm erlaubt.

Bei der Eintragsvorrichtung handelt es sich beispielsweise um eine Vorrichtung, die an einer Düse oder einem Einperlsystem in die Salpetersäure enthaltende Lösung führende Leitung einmündet, wobei die Düse oder das Einperlsystem einen Abschnitt aus einem porösen Material, etwa Sinterkeramik, umfasst, deren Porendurchmesser so gewählt ist, dass Nanobläschen in einer gewünschten Größenordnung mit einem Durchmesser zwischen 20 nm und 1000 nm, in der Salpetersäure enthaltenden Lösung erzeugt werden können.

Bei der mit der Eintragsvorrichtung ausgerüsteten Leitung für Salpetersäure enthaltenden Lösung handelt es sich beispielsweise um eine vom Kondensator zum ersten Absorptionsturm führende Leitung und/oder in eine vom Sumpf des Absorptionsturms abführende und/oder in die Bleichkolonne einmündenden Leitung. Die Leitung kann auch eine Kreislaufleitung sein, mittels der aus dem Sumpf eines Reaktors, also beispielsweise des Kondensators, des ersten (oder eines weiteren) Absorptionsturms oder der Bleichkolonne Salpetersäure enthaltende Lösung entnommen wird um sie anschließend wieder in den gleichen Reaktor zurückzuführen, oder eine Bypassleitung, die lediglich einen Teilstrom eines durch eine Transportleitung geführten Stroms Salpetersäure enthaltender Lösung aufnimmt. Die Erzeugung oder Einleitung der Sauerstoff enthaltenden Nanobubbles kann darüber hinaus in lediglich einer oder einzelnen der genannten Leitungen erfolgen. Weiterhin kann die Einleitung des Sauerstoffs in Form von Sauerstoff enthaltenden Nanobubbles auch ergänzend zu anderen, aus dem Stande der Technik bekannten Möglichkeiten der Sauerstoffzuführung zum Einsatz kommen; demzufolge können im letztgenannten Falle nur ein Teil der genannten Leitungen mit einer Eintragsvorrichtung zur Zuführung von Sauerstoff in Form von Sauerstoff enthaltenden Nanobubbles ausgerüstet sein, während gleichzeitig an anderen Stellen konventionelle Systeme zum Zuführen von Sauerstoff vorhanden sind.

Sofern es sich bei der Salpetersäure enthaltende Lösung führende Leitung um eine Steigleitung handelt, ist das Eintragseinrichtung bevorzugt in einem - geodätisch gesehen - unteren Bereich der Leitung angeordnet. Diese Ausgestaltung hat insbesondere den Vorteil, dass der hydrostatische Druck der in der Verbindungsleitung vorliegenden Flüssigkeitssäule das Einlösen des Sauerstoffs begünstigt. In dem vergleichsweise langen Transportweg bleiben insbesondere Nanobubbles lange erhalten und sorgen so für eine andauernde und gleichmäßige Zuführung von Sauerstoff in de Salpetersäure enthaltende Lösung. Die lange Lebensdauer der Nanobubbles begünstigt zudem den Einsatz von Mitteln, die die Kontaktzeit von Sauerstoff und Salpetersäure enthaltender Lösung verlängern, beispielsweise eine verlängerte Leitung oder ein Abschnitt mit einer verlangsamten Strömungsgeschwindigkeit.

In einer abermals vorteilhaften Ausgestaltung der Erfindung sind in der Salpetersäure enthaltende Lösung führenden Leitung Mittel vorgesehen, die einen möglichst hohen Druck der Salpetersäure enthaltenden Lösung innerhalb des Bereiches der Leitung, in den der Sauerstoff zugeführt wird, zu gewährleisten. Beispielsweise handelt es sich dabei um einen stromauf zur Eintragsvorrichtung angeordneten Verdichter und einen stromab dazu angeordneten Druckreduzierer, mittels denen in der Leitung ein Druck erzeugt wird, der zumindest höher als der hydrostatische Druck ist und beispielsweise 10-15 bar(g) beträgt.

Im Falle einer Produktionsanlage, die mehr als einen Absorptionsturm aufweist, also bei der dem ersten Absorptionsturm wenigstens ein zweiter Absorptionsturm oder mehrere zweite Absorptionstürme nachgeschaltet ist/sind und eine Steigleitung oder mehrere Steigleitungen vorhanden ist/sind, die vom Boden des zweiten bzw. nachfolgenden Absorptionsturms zum Kopfraum des ersten Absorptionsturms bzw. eines vorgeschalteten zweiten Absorptionsturms führt/führen, sieht eine bevorzugte Ausgestaltung der Erfindung vor, dass in zumindest in eine oder einigen dieser Steigleitungen und/oder in den Boden des zweiten Absorptionsturms (oder eines weiteren, falls vorhanden) eine mit einer Quelle für Sauerstoff strömungsverbundene Zuleitung an einer Eintragsvorrichtung zum Eintragen des Sauerstoffs in Form von Sauerstoff enthaltenden Nanobubbles einmündet.

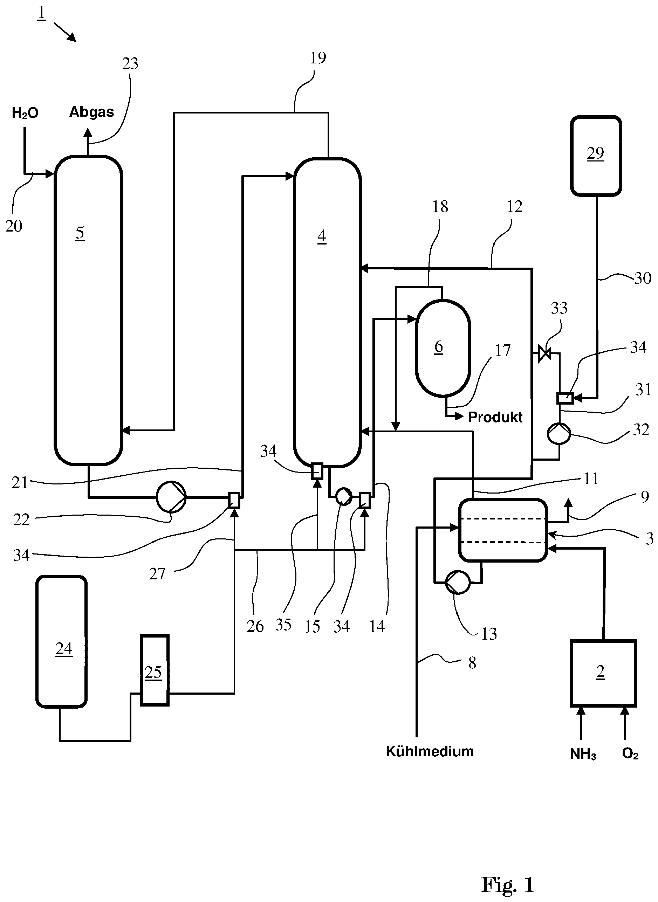

Anhand der Zeichnung soll ein Ausführungsbeispiel der Erfindung näher erläutert werden. Die einzige Zeichnung (Fig. 1) zeigt schematisch den Schaltplan einer erfindungsgemäßen Produktionsanlage zum Herstellen von Salpetersäure.

Die in Fig. 1 gezeigte Produktionsanlage 1 zur Herstellung von Salpetersäure umfasst in an sich bekannter Weise eine Ammoniakverbrennungsanlage 2, einen Kondensator 3, mehrere, im Ausführungsbeispiel zwei, Absorptionstürme 4, 5 und eine Bleichkolonne 6. Bei den Absorptionstürmen 4, 5 handelt es sich im Ausführungsbeispiel um Nieder- und Mitteldruck-Kolonnen, die bei einem Betriebsdruck von 2 bis 5 bar(g) arbeiten; jedoch können auch Mitteldruck- oder Hochdruckkolonnen mit einem Betriebsdruck von bis zu 15 bar(g) zum Einsatz kommen.

Die Ammoniak-Verbrennungsanlage 2 dient dazu, gasförmigen Ammoniak und Sauerstoff in bei einer Temperatur von ungefähr 800°C bis 900°C an einem Netzkatalysator aus einem Edelmetall, wie beispielsweise Platin oder einer Legierung aus Platin/Rhodium, zu Stickstoffmonoxid und Wasserdampf umzusetzen. Als Sauerstoff wird dabei üblicherweise Luftsauerstoff eingesetzt. Die Reaktionsprodukte der in der Ammoniak-Verbrennungsanlage 2 ablaufenden Reaktion, im Wesentlichen Stickstoffmonoxid und Wasserdampf, sowie überschüssiger Sauerstoff, werden dem Kondensator 3 zugeführt, in dem die Reaktionsprodukte durch indirekten thermischen Kontakt mit einem über eine Kühlmediumszuleitung 8 herangeführten Kühlmedium, beispielsweise Wasser oder verflüssigter oder kalter gasförmiger Stickstoff, auf eine Temperatur abgekühlt werden, bei der mindestens ein Teil der Reaktionsprodukte kondensiert, beispielsweise auf 60°C bis 80°C. Das beim Wärmetausch erwärmte Kühlmedium wird über eine Kühlmediumsausleitung 9 abgeführt und in die Atmosphäre entlassen oder einer anderweitigen Verwendung zugeführt. Ein Teil der Stickoxide reagiert mit dem Wasser zu Salpetersäure, die sich am Boden des Kondensators 3 in einer wässerigen Lösung abscheidet. Das im Kondensator 3 vorhandene Gasgemisch wird als Prozessgas über eine Gaszuleitung 11 in einen unteren Bereich des Absorptionsturms 4 eingeleitet. Ein Teil des Stickstoffmonoxids wird mit überschüssigem Sauerstoff zu Stickstoffdioxid bzw. zu dessen Dimer Distickstofftetraoxid oxidiert. Die wässerige, Salpetersäure enthaltende Lösung aus dem Boden des Kondensators 3 wird über eine Verbindungsleitung 12 einem gegenüber der Einmündung der Gaszuleitung 11 höheren Bereich des Absorptionsturms 4 zugeführt und beispielsweise entweder mittels einer hier nicht näher erläuterten Düsenanordnung in diesen eingesprüht oder - hier nicht gezeigt - auf einen oder mehreren von im Absorptionsturm 4 eingebauten Böden eingeleitet. Sofern es sich bei der Verbindungsleitung 12 um eine Steigleitung handelt, sorgt eine Fördereinrichtung 13 für den Transport der Lösung.

Die in den Absorptionsturm 4 eingeleitete Salpetersäure enthaltende Lösung aus dem Kondensator 3 sinkt nach unten und kommt dabei mit dem von unten aufsteigenden, stickoxidhaltigen Prozessgasen in Kontakt. Dabei reagieren weitere Anteile der im Gasgemisch enthaltenen Stickoxide zu Salpetersäure, die sich in einer wässerigen Lösung im Sumpf des Absorptionsturms 4 ansammelt. Diese wässerige, Salpetersäure enthaltende Lösung wird über eine Leitung 14 abgeführt, mittels einer Fördereinrichtung 15 zur Bleichkolonne 6 transportiert und dort eingesprüht. In der Bleichkolonne 6 fällt wiederum stickoxidhaltiges Gas an, das über eine Leitung 18 in die Gaszuleitung 11 und über diese in den Absorptionsturm 4 eingeleitet wird. Über Leitung 17 wird das Produkt, die gebleichte Säure, ausgeleitet.

Das im Absorptionsturm 4 verbliebene, stickoxidhaltige Gasgemisch wird über eine Prozessgasleitung 19 abgeführt und in einen unteren Bereich des Absorptionsturms 5 eingeleitet. In den Kopfraum des Absorptionsturms 5 wird zugleich Wasser aus einer Wasserzuleitung 20 eingesprüht. Das von unten aufsteigende, stickoxidhaltige Gasgemisch kommt im Absorptionsturm 5 mit dem eingesprühten Wasser in Kontakt und reagiert zumindest teilweise mit diesem zu Salpetersäure, die sich am Boden des Absorptionsturms 5 in einer wässerigen Lösung ansammelt. Diese wässerige, Salpetersäure enthaltende Lösung wird über eine Steigleitung 21 abgeführt und mittels einer Fördereinrichtung 22 zum Kopfraum des Absorptionsturms 4 geführt, dort eingesprüht, und durchläuft den Absorptionsturm 4 im Gegenstrom zum Prozessgasstrom, wobei sich immer stärker konzentrierte Salpetersäure bildet.

Im Absorptionsturm 5 noch vorhandenes Gasgemisch wird über eine Abgasleitung 23 abgeleitet und gegebenenfalls einer hier nicht gezeigten Einrichtung zur Entstickung zugeführt, in der die verbliebenen Stickoxide weitestgehend aus dem Gasgemisch entfernt werden.

Aus Gründen der Übersichtlichkeit umfasst das in Fig. 1 gezeigte Ausführungsbeispiel nur zwei Absorptionstürme 4, 5; es sind im Rahmen der Erfindung selbstverständlich auch Ausführungsbeispiele mit drei oder mehr Absorptionstürmen denkbar, die von den stickoxidhaltigen Gasströmen und den wässerigen, Salpetersäure enthaltenden Lösungen in bekannter Weise im Gegenstrom durchlaufen werden.

Um die Oxidation der nitrosen Gase und der salpetrigen Säure zu intensivieren, wird dem Prozess an verschiedenen Stellen Sauerstoff zugeführt. Beispielsweise wird Sauerstoff in die vom Kondensator 3 zum Absorptionsturm 4 fließende Salpetersäure enthaltende Lösung eingespeist. Dazu wird der Sauerstoff einer Sauerstoffquelle, beispielsweise einem Sauerstofftank 29 oder einer Leitung entnommen und über eine Sauerstoffleitung 30 gasförmig in eine Bypassleitung 31 eingespeist, die von der Verbindungsleitung 12 abgeht und stromab zur Einmündung der Sauerstoffleitung 30 wieder in diese einmündet. Um im Bereich der Einmündung der Sauerstoffleitung 30 einen möglichst hohen Druck erzielen zu können, ist in der Bypassleitung 31 stromauf dazu ein Verdichter 32 und stromab dazu ein Druckminderer 33 angeordnet, der den Druck wieder auf den in der Verbindungsleitung 12 herrschenden Druck reduziert. Auf diese Weise kann in der Bypassleitung 31 im Bereich der Einmündung der Sauerstoffleitung 30 ein Druck von 10 bar(g) bis 15 bar(g) oder noch darüber realisiert werden, der das Einlösen des Sauerstoffs in die Salpetersäure enthaltende Lösung begünstigt. Alternativ dazu kann die Bypassleitung 31 auch direkt in den Absorptionsturm 4 einmünden.

Zusätzlich wird im hier gezeigten Ausführungsbeispiel Sauerstoff aus der gleichen oder einer anderen einer Sauerstoffquelle, beispielsweise einem Tank 24 entnommen und in den Prozess eingebracht. Dazu durchläuft der Sauerstoff in an sich bekannter Weise einen Luftverdampfer 25 und wird kalt, jedoch in Gasform, über Sauerstoffzuleitungen 26, 27 der Leitung 14 und/oder der Steigleitung 21 zugeführt. Anstelle der Vergasung in einem Luftverdampfer 25 kann der Kälteinhalt des verflüssigten Sauerstoffs im Übrigen auch zur Kühlung der Reaktionsprodukte aus der Ammoniak-Verbrennungsanlage 2 im Kondensator 3 herangezogen werden, indem beispielsweise das dort eingesetzte Kühlmedium einen Wärmetausch mit dem flüssigen Sauerstoff aus dem Tank 24 unterzogen wird, oder der flüssige Sauerstoff aus Tank 24 wird direkt dem Kondensator 3 als Kältemedium zugeführt.

In der Steigleitung 21 sowie in den Leitungen 12, 14, sofern es sich bei diesen ebenfalls um Steigleitungen handelt, wird der Sauerstoff bevorzugt in einem geodätisch unteren Bereich und stromab zur jeweiligen Fördereinrichtung 13, 15, 22, 32 eingebracht, um den hydrostatischen Druck der in der Leitung 12, 14, 21 vorliegenden Flüssigkeitssäule und ggf. einen durch die jeweilige Fördereinrichtung 13, 15, 22, 32 erzeugten zusätzlichen Druck zu nutzen. Innerhalb des sich stromabwärts an den Eintragspunkt für den Sauerstoff anschließenden Abschnitts der Leitungen 12, 14, 21 löst sich der Sauerstoff teilweise und reagiert mit Stickoxiden und weiteren Zwischenprodukten, die in der Salpetersäure enthaltenden Lösung gelöst sind, und ggf. mit Wasser. Ein Teil des im Überschuss eingebrachten Sauerstoffs reagiert nicht mit den Stickoxiden und gelangt gasförmig in den jeweiligen Absorptionsturm 4, 5, wo er, zu einem höheren Sauerstoffpartialdruck führt, der wiederum die Bildung von Salpetersäure im jeweiligen Absorptionsturm 4, 5 begünstigt. Die Bildung von Salpetersäure wird weiterhin durch die tiefe Temperatur des zugeführten Sauerstoffs unterstützt.

Erfindungsgemäß wird zumindest ein Teil des in die Leitungen 12, 14, 21 eingebrachten Sauerstoff in Form von Sauerstoff enthaltenden Nanobubbles, also Bläschen mit einem durchschnittlichen Durchmesser zwischen 20 nm und 1000 nm zugeführt. Dazu sind die Orte, an denen der Eintrag des Sauerstoffs in die Leitungen 12, 14, 21 (oder zumindest eine oder einige dieser Orte) erfolgt, mit Eintragsvorrichtungen 34 ausgerüstet, mittels denen der Eintrag des Sauerstoff Sauerstoff enthaltenden Gases in Form von Nanoubbles möglich ist. Die Eintragsvorrichtungen 34 umfassen beispielsweise eine Düse oder ein Einperlsystem aus einem porösen Material, wie Sintermetall oder Sinterkeramik, an dem Sauerstoff enthaltende Nanobubbles unmittelbar in der Salpetersäure enthaltenden Lösung erzeugt werden. Die Nanobubbles werden anschließend vom Strom der Lösung mitgetragen und sorgen im weiteren Transport für eine effiziente Einlösung des in ihnen enthaltenen Sauerstoffs.

Eine Zuführung von Sauerstoff in Form von Sauerstoff enthaltenden Nanobubbles kann im Übrigen - anstelle oder ergänzend zu einer Zuführung in eine Salpetersäure enthaltende Lösung führende Leitung 12, 14, 21, auch in den Boden eines Reaktors, also des Kondensators 3, wenigstens eines Absorptionsturms 4, 5 und/oder der Bleichkolonne 6 erfolgen, wie hier durch eine Sauerstoffzuführung 35 in den Sumpf des Absorptionsturms 4 angedeutet. Die Erzeugung der Nanobläschen erfolgt dabei bevorzugt unmittelbar in die Salpetersäure enthaltende Lösung, die sich am Boden des jeweiligen Reaktors angesammelt hat, mit Hilfe einer Eintragsvorrichtung 34, die an die Sauerstoffzuführung 35 angeschlossen ist.

Im Übrigen ist es im Rahmen der Erfindung keineswegs erforderlich, dass der Eintrag des Sauerstoffs ausschließlich in Form von Nanobubbles erfolgt. Möglich ist vielmehr auch, dass der Eintrag des Sauerstoffs in Form von Nanobubbles ergänzend zu anderen Eintragsweisen für den Sauerstoff vorgenommen wird, wie sie beispielsweise aus dem Stand der Technik bekannt sind. Beispielsweise kann der Eintrag des Sauerstoffs an einigen der genannten Orte in Form von Sauerstoff enthaltenden Nanobubbles erfolgen, während der an anderen Orten in konventioneller Weise erfolgt, beispielsweise mittels der in der EP 2 953 894 A1 beschriebenen Düsenanordnung.

Die Erfindung ist insbesondere auch zur Nachrüstung in Altanlagen geeignet, die üblicherweise mit Absorptionstürmen arbeiten, deren Betriebsdruck im Nieder- und Mitteldruckbereich, also bei etwa 1 bis 5 bar(g), liegt. Die gegenständliche Erfindung ist jedoch ebenso für die Nachrüstung bei Hoch- und Dual-Druckanlagen einsetzbar. Hierbei könnte man sogar zu noch deutlich geringeren NOₓ - Konzentrationen im Abgas gelangen, wodurch die Betriebskosten von Entstickungsanlagen deutlich verringert oder deren Einsatz sogar gänzlich vermieden werden könnte. Dabei können wesentliche Kosteneinsparungen durch Einsparung von Ammoniak und/oder Erdgas resultieren, welche üblicherweise für die Entstickung als Reduktionsmittel eingesetzt werden.

### Bezugszeichenliste

- 1.: Produktionsanlage
- 2.: Ammoniak-Verbrennungsanlage
- 3.: Kondensator
- 4.: Absorptionsturm
- 5.: Absorptionsturm
- 6.: Bleichkolonne
- 7.: -
- 8.: Kühlmediumszuleitung
- 9.: Kühlmediumsausleitung
- 10.: -
- 11.: Gaszuleitung
- 12.: Verbindungsleitung
- 13.: Fördereinrichtung
- 14.: Leitung
- 15.: Fördereinrichtung
- 16.: -
- 17.: Produktausleitung
- 18.: Leitung
- 19.: Prozessgasleitung
- 20.: Wasserzuleitung
- 21.: Steigleitung
- 22.: Fördereinrichtung
- 23.: Abgasleitung
- 24.: Tank
- 25.: Luftverdampfer
- 26.: Sauerstoffleitung
- 27.: Sauerstoffleitung
- 28.: -
- 29.: Sauerstofftank
- 30.: Sauerstoffleitung
- 31.: Bypassleitung
- 32.: Verdichter
- 33.: Druckminderer
- 34.: Eintragsvorrichtung
- 35.: Sauerstoffzuführung

## Patentansprüche

1. Verfahren zum Herstellen von Salpetersäure, bei dem
a. in einer Ammoniakverbrennungsanlage (2) Ammoniak mit Sauerstoff zu Stickoxiden und Wasserdampf umgesetzt wird,
b. die Stickoxide und der Wasserdampf aus Schritt (a.) in einem Kondensator (3) auf eine Temperatur abgekühlt werden, bei dem mindestens ein Teil der Reaktionsprodukte kondensiert, wobei die Stickoxide teilweise mit dem kondensierten Wasserdampf und Sauerstoff zu einer wässerigen, Salpetersäure enthaltenden Lösung reagieren und teilweise in einem stickoxidhaltigen Gasgemisch verbleiben,
c. die Salpetersäure enthaltende Lösung aus Schritt (b.) aus dem Kondensator (3) über eine Verbindungsleitung (12) einem ersten Absorptionsturm (4) zugeführt wird,
d. das stickoxidhaltige Gasgemisch aus Schritt (b.) dem ersten Absorptionsturm (4) zugeführt wird, in welchem es mit Wasser oder einer wässerigen Lösung in Kontakt gebracht wird, wobei das stickoxidhaltige Gasgemisch mit Wasser zumindest teilweise unter Bildung einer wässerigen, Salpetersäure enthaltenden Lösung reagiert, die sich, zusammen mit der Salpetersäure enthaltenden Lösung aus Schritt (c.), am Boden des ersten Absorptionsturms (4) ansammelt,
e. Salpetersäure enthaltende Lösung aus Schritt (d.) über eine Förderleitung (14) einer Bleichkolonne (6) zugeführt wird, wobei
f. in wenigstens eine Salpetersäure enthaltende Lösung führende Leitung (12, 14) und/oder in einen Salpetersäure enthaltende Lösung (12, 14) aufweisenden Reaktor (3, 4, 6) Sauerstoff eingeleitet wird, **dadurch gekennzeichnet, dass**
g. dass der Sauerstoff in Schritt (f.) der Salpetersäure enthaltende Lösung in der Leitung (12, 14) und/oder im Reaktor (3, 4, 6) zumindest teilweise in Form von Sauerstoff enthaltenden Nanobubbles mit einem Durchmesser zwischen 20 nm und 1 µm zugeführt wird.

2. Verfahren nach Anspruch 1, **dadurch gekennzeichnet, dass** das stickoxidhaltige Gasgemisch, nachdem es den ersten Absorptionsturm (4) durchlaufen hat, einem zweiten Absorptionsturm (5) zugeführt wird, in dem es mit Wasser oder einer wässerigen Salpetersäure enthaltenden Lösung Salpetersäurelösung in Kontakt gebracht wird, wobei das stickoxidhaltige Gasgemisch zumindest teilweise unter Bildung einer Salpetersäure enthaltenden Lösung reagiert, die sich am Boden des zweiten Absorptionsturms (5) ansammelt und von dort über eine Steigleitung (21) einem oberen Bereich des ersten Absorptionsturms (4) zugeführt wird, wobei der Salpetersäure enthaltende Lösung in der Steigleitung (21) und/oder dem Boden des zweiten Absorptionsturms (5) Sauerstoff in Form von Sauerstoff enthaltenden Nanobubbles zugeführt wird.

3. Verfahren nach einem der vorhergehenden Ansprüche, **dadurch gekennzeichnet, dass** Salpetersäure enthaltende Lösung vom Boden eines Absorptionsturms (4, 5) entnommen und über eine Förderleitung (14) einem oberen Bereich des gleichen Absorptionsturms (4, 5) zugeführt wird, und in die durch die Förderleitung (14) geführte Salpetersäure enthaltende Lösung Sauerstoff in Form von Sauerstoff enthaltenden Nanobubbles eingetragen wird.

4. Verfahren nach einem der vorhergehenden Ansprüche, **dadurch gekennzeichnet, dass** die Einleitung des Sauerstoffs im Form von Sauerstoff enthaltenden Nanobubbles in einem geodätisch unteren Bereich der jeweiligen Leitung (12, 14, 21) erfolgt.

5. Verfahren nach einem der vorhergehenden Ansprüche, **dadurch gekennzeichnet, dass** von der durch die Steigleitung (12, 14, 21) geführten Salpetersäure enthaltenden Lösung ein Teilstrom abgezweigt, verdichtet und vor seiner Zuführung an den Absorptionsturm (4), bzw. der Bleichkolonne (6), mit Sauerstoff in Form von Sauerstoff enthaltenen Nanobubbles angereichert wird.

6. Produktionsanlage zum Herstellen von Salpetersäure,
mit einer Ammoniakverbrennungsanlage (2) zum Umsetzen von Ammoniak mit Sauerstoff zu Stickoxiden und Wasserdampf,
mit einem mit der Ammoniakverbrennungsanlage (2) verbundenen Kondensator (3) zum Abkühlen der Reaktionsprodukte aus der Ammoniakverbrennungsanlage (2) auf eine Temperatur, bei der mindestens ein Teil der Reaktionsprodukte kondensiert,
mit einem ersten Absorptionsturm (4) zum Waschen des im Kondensator (3) entstehenden Gasgemisches mit Wasser oder einer wässerigen Salpetersäure enthaltenden Lösung,
mit einer Bleichkolonne (6) zum Bleichen von aus dem ersten Absorptionsturm (4) entnommener Salpetersäure enthaltenden Lösung,
mit wenigstens einer aus dem Kondensator (3) und/oder dem ersten Absorptionsturm (4) abführenden und/oder in den Kondensator (3) und/oder in den ersten Absorptionsturm (4) und/oder der Bleichkolonne hineinführenden Leitung (12, 14) zum Transportieren einer Salpetersäure enthaltenden Lösung, **dadurch gekennzeichnet,**
**dass** wenigstens eine Leitung (12, 14) zum Transportieren einer Salpetersäure enthaltenden Lösung und/oder der Boden des Kondensators (3) und/oder des Absorptionsturms (4) und/oder der Bleichkolonne (6) mit einer mit einer Zuleitung (26, 27, 30, 35) für Sauerstoff strömungsverbundenen Eintragsvorrichtung (34) zum Eintragen von Sauerstoff in Form von Sauerstoff enthaltenden Nanobubbles mit einem Durchmesser zwischen 20 nm und 1 µm ausgerüstet ist.

7. Produktionsanlage nach Anspruch 6, **dadurch gekennzeichnet, dass** in der Leitung (12, 14) Mittel (32) zum Verdichten der Salpetersäure enthaltenden Lösung zumindest im Bereich der Eintragsvorrichtung (34) vorgesehen sind.

8. Produktionsanlage nach einem der Ansprüche 6 oder 7, dass die Leitung (12, 14) als Steigleitung ausgebildet ist, und die Eintragsvorrichtung (34) in einem geodätisch unteren Bereich der Steigleitung angeordnet ist.

9. Produktionsanlage nach einem der Ansprüche 6 bis 8, **dadurch gekennzeichnet, dass** dem ersten Absorptionsturm (4) wenigstens ein zweiter Absorptionsturm (5) nachgeschaltet ist, der über eine vom Boden des zweiten Absorptionsturms (5) zum Kopfraum des ersten Absorptionsturms (4) führende Steigleitung (21) mit diesem verbunden ist, wobei die Steigleitung (21) und/oder der Boden des wenigstens einen zweiten Absorptionsturms (5) mit einer mit einer Zuleitung (26, 27, 30, 35) für Sauerstoff strömungsverbundenen Eintragsvorrichtung (34) zum Eintragen von Sauerstoff in Form von Sauerstoff enthaltenden Nanobubbles ausgerüstet ist.

## Claims

1. Process for preparing nitric acid, in which
a. ammonia is reacted with oxygen to give nitrogen oxides and steam in an ammonia combustion plant (2),
b. the nitrogen oxides and the steam from step (a.) are cooled in a condenser (3) to a temperature at which at least some of the reaction products condense, with the nitrogen oxides in part reacting with the condensed steam and oxygen to give an aqueous, nitric acid-containing solution and in part remaining in a nitrogen oxide-containing gas mixture,
c. the nitric acid-containing solution from step (b.) is supplied from the condenser (3) via a connection conduit (12) to a first absorption tower (4),
d. the nitrogen oxide-containing gas mixture from step (b.) is supplied to the first absorption tower (4), in which it is brought into contact with water or with an aqueous solution, wherein the nitrogen oxide-containing gas mixture reacts with water at least in part to form an aqueous, nitric acid-containing solution which, together with the nitric acid-containing solution from step (c.), accumulates at the base of the first absorption tower (4),
e. nitric acid-containing solution from step (d.) is supplied via a conveying conduit (14) to a bleaching column (6), wherein
f. oxygen is introduced into at least one conduit (12, 14) that conducts nitric acid-containing solution and/or into a reactor (3, 4, 6) comprising nitric acid-containing solution (12, 14),
**characterized in that**
g. the oxygen is supplied in step (f.) to the nitric acid-containing solution in the conduit (12, 14) and/or in the reactor (3, 4, 6) at least partly in the form of oxygen-containing nanobubbles having a diameter of between 20 nm and 1 µm.

2. Process according to Claim 1, **characterized in that** the nitrogen oxide-containing gas mixture, after having passed through the first absorption tower (4), is supplied to a second absorption tower (5) in which it is brought into contact with water or with an aqueous nitric acid-containing solution nitric acid solution, wherein the nitrogen oxide-containing gas mixture reacts at least in part to form a nitric acid-containing solution, which accumulates at the base of the second absorption tower (5) and from there is supplied to an upper region of the first absorption tower (4) via a riser conduit (21), wherein oxygen is supplied to the nitric acid-containing solution in the riser conduit (21) and/or to the base of the second absorption tower (5) in the form of oxygen-containing nanobubbles.

3. Process according to either of the preceding claims, **characterized in that** nitric acid-containing solution is withdrawn from the base of one absorption tower (4, 5) and supplied via a conveying conduit (14) to an upper region of the same absorption tower (4, 5), and oxygen is introduced into the nitric acid-containing solution conducted through the conveying conduit (14) in the form of oxygen-containing nanobubbles.

4. Process according to any of the preceding claims, **characterized in that** the introduction of the oxygen in the form of oxygen-containing nanobubbles is effected in a geodetically lower region of the respective conduit (12, 14, 21).

5. Process according to any of the preceding claims, **characterized in that** a substream is branched off from the nitric acid-containing solution conducted through the riser conduit (12, 14, 21), is compressed and is enriched with oxygen in the form of oxygen-containing nanobubbles before being supplied to the absorption tower (4) or the bleaching column (6).

6. Production plant for preparing nitric acid,
comprising an ammonia combustion plant (2) for reacting ammonia with oxygen to give nitrogen oxides and steam, comprising a condenser (3) connected to the ammonia combustion plant (2) for cooling the reaction products from the ammonia combustion plant (2) to a temperature at which at least some of the reaction products condense, comprising a first absorption tower (4) for scrubbing the gas mixture formed in the condenser (3) with water or with an aqueous nitric acid-containing solution, comprising a bleaching column (6) for bleaching nitric acid-containing solution withdrawn from the first absorption tower (4),
comprising at least one conduit (12, 14), which leads away out from the condenser (3) and/or the first absorption tower (4) and/or which leads into the condenser (3) and/or into the first absorption tower (4) and/or the bleaching column, for transporting a nitric acid-containing solution,
**characterized**
**in that** at least one conduit (12, 14) for transporting a nitric acid-containing solution and/or the base of the condenser (3) and/or of the absorption tower (4) and/or of the bleaching column (6) is fitted with an introduction apparatus (34) connected in terms of flow for oxygen with a feed conduit (26, 27, 30, 35) for introducing oxygen in the form of oxygen-containing nanobubbles having a diameter of between 20 nm and 1 µm.

7. Production plant according to Claim 6, **characterized in that** means (32) for compressing the nitric acid-containing solution are provided in the conduit (12, 14) at least in the region of the introduction apparatus (34) .

8. Production plant according to either of Claims 6 and 7, **characterized in that** the conduit (12, 14) is in the form of a riser conduit, and the introduction apparatus (34) is arranged in a geodetically lower region of the riser conduit.

9. Production plant according to any of Claims 6 to 8, **characterized in that** at least one second absorption tower (5) is connected downstream of the first absorption tower (4) and is connected to same via a riser conduit (21) leading from the base of the second absorption tower (5) to the headspace of the first absorption tower (4), wherein the riser conduit (21) and/or the base of the at least one second absorption tower (5) is fitted with an introduction apparatus (34) connected in terms of flow for oxygen with a feed conduit (26, 27, 30, 35) for introducing oxygen in the form of oxygen-containing nanobubbles.

## Revendications

1. Procédé de préparation d'acide nitrique, dans lequel
a. de l'ammoniac est transformé avec de l'oxygène en oxydes d'azote et en vapeur d'eau dans une installation de combustion d'ammoniac (2),
b. les oxydes d'azote et la vapeur d'eau de l'étape (a.) sont refroidis dans un condenseur (3) à une température à laquelle au moins une partie des produits de réaction condense, les oxydes d'azote réagissant partiellement avec la vapeur d'eau condensée et de l'oxygène en une solution aqueuse, contenant de l'acide nitrique et restant partiellement dans un mélange gazeux contenant des oxydes d'azote,
c. la solution contenant de l'acide nitrique de l'étape (b.) est fournie, à partir du condenseur (3), par l'intermédiaire d'une conduite de liaison (12), à une première tour d'absorption (4),
d. le mélange gazeux contenant des oxydes d'azote de l'étape (b.) est fourni à la première tour d'absorption (4) dans laquelle il est mis en contact avec de l'eau ou avec une solution aqueuse, le mélange gazeux contenant des oxydes d'azote réagissant avec l'eau au moins partiellement avec formation d'une solution aqueuse contenant de l'acide nitrique qui s'accumule, conjointement avec la solution contenant de l'acide nitrique de l'étape (c.), au fond de la première tour d'absorption (4),
e. la solution contenant de l'acide nitrique de l'étape (d.) est fournie à une colonne de blanchiment (6) par l'intermédiaire d'une conduite de transport (14),
f. de l'oxygène est introduit dans au moins une conduite (12, 14) guidant de la solution contenant de l'acide nitrique et/ou dans un réacteur (3, 4, 6) présentant de la solution (12, 14) contenant de l'acide nitrique, **caractérisé en ce que**
g. l'oxygène dans l'étape (f.) est fourni au moins partiellement sous forme de nanobulles contenant de l'oxygène, présentant un diamètre entre 20 nm et 1 µm, à la solution contenant de l'acide nitrique dans la conduite (12, 14) et/ou dans le réacteur (3, 4, 6) .

2. Procédé selon la revendication 1, **caractérisé en ce que** le mélange gazeux contenant des oxydes d'azote, après qu'il a traversé la première tour d'absorption (4), est fourni à une deuxième tour d'absorption (5), dans laquelle il est mis en contact avec de l'eau ou avec une solution aqueuse contenant de l'acide nitrique solution d'acide nitrique, le mélange gazeux contenant des oxydes d'azote réagissant au moins partiellement avec formation d'une solution contenant de l'acide nitrique, qui s'accumule au fond de la deuxième tour d'absorption (5) et qui est fournie à partir de là, par l'intermédiaire d'une conduite ascendante (21), à une zone supérieure de la première tour d'absorption (4), de l'oxygène sous forme de nanobulles contenant de l'oxygène étant fourni à la solution contenant de l'acide nitrique dans la conduite ascendante (21) et/ou dans le fond de la deuxième tour d'absorption (5).

3. Procédé selon l'une des revendications précédentes, **caractérisé en ce que** de la solution contenant de l'acide nitrique est prélevée du fond d'une tour d'absorption (4, 5) et fournie, par l'intermédiaire d'une conduite de transport (14), à une zone supérieure de la même tour d'absorption (4, 5) et de l'oxygène sous forme de nanobulles contenant de l'oxygène est introduit dans la solution contenant de l'acide nitrique guidée à travers la conduite de transport (14).

4. Procédé selon l'une des revendications précédentes, **caractérisé en ce que** l'introduction de l'oxygène sous forme de nanobulles contenant de l'oxygène est effectuée dans une zone géodésiquement inférieure de la conduite (12, 14, 21) respective.

5. Procédé selon l'une des revendications précédentes, **caractérisé en ce qu'**un flux partiel est dérivé de la solution contenant de l'acide nitrique guidée à travers la conduite ascendante (12, 14, 21), comprimé et enrichi en oxygène sous forme de nanobulles contenant de l'oxygène avant sa fourniture à la tour d'absorption (4) ou, selon le cas, à la colonne de blanchiment (6).

6. Installation de production pour la préparation d'acide nitrique,
présentant une installation de combustion d'ammoniac (2) pour la transformation d'ammoniac avec de l'oxygène en oxydes d'azote et en vapeur d'eau,
présentant un condenseur (3) relié à l'installation de combustion d'ammoniac (2) pour le refroidissement des produits de réaction provenant de l'installation de combustion d'ammoniac (2) à une température à laquelle au moins une partie des produits de réaction condense, présentant une première tour d'absorption (4) pour le lavage du mélange gazeux se formant dans le condenseur (3) avec de l'eau ou avec une solution aqueuse contenant de l'acide nitrique,
présentant une colonne de blanchiment (6) pour le blanchiment de la solution contenant de l'acide nitrique prélevée de la première tour d'absorption (4),
présentant au moins une conduite (12, 14) partant du condenseur (3) et/ou de la première tour d'absorption (4) et/ou arrivant dans le condenseur (3) et/ou dans la première tour d'absorption (4) et/ou dans la colonne de blanchiment pour le transport d'une solution contenant de l'acide nitrique,
**caractérisée en ce qu'**au moins une conduite (12, 14) pour le transport d'une solution contenant de l'acide nitrique et/ou le fond du condenseur (3) et/ou de la tour d'absorption (4) et/ou de la colonne de blanchiment (6) est/sont équipé(e) (s) d'un dispositif d'introduction (34) relié fluidiquement à une conduite d'alimentation (26, 27, 30, 35) pour l'oxygène pour l'introduction d'oxygène sous forme de nanobulles contenant de l'oxygène présentant un diamètre entre 20 nm et 1 µm.

7. Installation de production selon la revendication 6, **caractérisée en ce que** des moyens (32) pour la compression de la solution contenant de l'acide nitrique sont prévus dans la conduite (12, 14), au moins dans la zone du dispositif d'introduction (34).

8. Installation de production selon l'une des revendications 6 ou 7, **caractérisée en ce que** la conduite (12, 14) est réalisée sous forme de conduite ascendante et le dispositif d'introduction (34) est agencé dans une zone géodésiquement inférieure de la conduite ascendante.

9. Installation de production selon l'une des revendications 6 à 8, **caractérisée en ce qu'**au moins une deuxième tour d'absorption (5) est disposée en aval de la première tour d'absorption (4), laquelle deuxième tour est reliée à l'espace de tête de la première tour d'absorption (4) par l'intermédiaire d'une conduite ascendante (21) allant du fond de la deuxième tour d'absorption (5) audit espace de tête, la conduite ascendante (21) et/ou le fond de ladite au moins une deuxième tour d'absorption (5) étant équipé(e) (s) d'un dispositif d'introduction (34) relié fluidiquement à une conduite d'alimentation (26, 27, 30, 35) pour l'oxygène pour l'introduction d'oxygène sous forme de nanobulles contenant de l'oxygène.
